# EUROPEAN PATENT SPECIFICATION

(11) **EP 2 199 206 B1**
(45) Date of publication and mention of the grant of the patent: **08.08.2012**
(21) Application number: 09179344.8
(22) Date of filing: 15.12.2009
(51) Int. Cl.: H05B 37/02, B64F 1/20, G08G 5/00, G08G 5/02, B64F 1/18

(54) **Network of radio-controlled light-warning devices**
Funkgesteuertes Lichtwarnvorrichtungsnetzwerk
Réseau d'avertissement lumineux radio-commandé

(30) Priority: 15.12.2008 IT RM20080666
(43) Date of publication of application: 23.06.2010
(73) Proprietor: Biofly S.r.l., 00040 Ardea (RM) (IT)
(72) Inventor: Zanzi, Eugenio, I-00040, Ardea (RM) (IT); Perrotta, Ferdinando, I-00040, Ardea (RM) (IT); Luzzana, Massimo, I-20090, Segrate (MI) (IT); Vanzago, Laura, I-28066, Galliate (NO) (IT)
(74) Representative: Sarpi, Maurizio

(56) References cited:
- EP-A- 1 596 639
- EP-A- 1 752 946
- WO-A-93/13984
- WO-A-2007/039924
- CA-A1- 2 007 978
- GB-A- 2 409 023
- US-A- 4 093 937

## Description

The present invention regards providing warnings in equipped areas, such as, for example, aircraft-landing areas, which are temporarily pre-arranged for emergency events or, in any case, for situations that require them to be equipped rapidly and rendered operative immediately.

The invention may be applied both to the air transport sector and to the land or sea transport sector.

The present invention basically regards a wireless data-transmission network, a plurality of warning lamps for implementing the network, and a mobile vehicle equipped with radio-frequency (RF) means designed to notify their own position, speed, and direction.

The invention also regards a method for converting the position and speed of vehicles that are moving in the vicinity into different light warnings.

### KNOWN ART

It is known, from CA 2007978, a portable lighting system providing temporary lighting for a helicopter landing area or light plane landing strip according to the preamble of claim 1. The system has a master unit which can be activated by radio and turns on a number of slave light units remotely. The lighting system has in combination a master light unit comprising a power supply means, a transmitter for transmitting a radio signal, and a master receiver for receiving a master radio signal to activate the transmitter to transmit the radio signal; the slave unit comprising at least one light with power supply means, and a receiver for receiving the radio signal from the master light unit to activate at least one light unit.

It is also known, from EP 1596639, a processing circuit which controls optic emitters to emit optic control signals to following marking device to switch-on the light source of the following marking device, on detection of an object e.g. aircraft by detector.

Furthermore, it is also known, from US 4093937, an automated bidirectional sequenced flashing light system for the purpose of controlling traffic direction on airport runways and the like. It includes a mastercontrol containing integrated logic circuit and solid state switching circuits, an opto-electronic wind direction sensor and a set of ten or more light assemblies placed midrunways and along runways for a short distance and a pair of same assemblies placed on each runway end or threshold. Integrated circuit components decode signals from sensor and establish direction of flashes and integrated gating provide signals for flashing of the corresponding pair of endlights. A balanced resistor capacitor network is used for crosswind delay.

Light warnings are normally used for signalling dangerous areas, conditions of risk, or for regulating the traffic at a crossroads.

Operation of the light warnings currently known is not aimed at guiding a single vehicle but is normally aimed at a large number of vehicles, which do not have active means for communicating their own data to the light-warning network. In addition, said vehicles are not able to detect the presence of other vehicles in the vicinity.
The plurality of light warnings according to the invention is designed to supply the pilot of an aircraft with an immediately perceptible message, guiding him along a critical path even in conditions of low visibility and in the presence of other moving vehicles equipped with transponders or other means for RF communication of their own data of identification and/or position and/or speed and/or direction.

According to the invention, the above has been obtained by appropriately placing, in a chosen area, a plurality of light-warning devices provided with autonomous energy sources (said devices being designated in what follows, for reasons of brevity, by "TZ"), which are equipped with means for mutual communication in wireless mode, at least one of which (MASTER) is equipped with means for receiving the data of position, speed, and direction of an aircraft (or motor vehicle or watercraft) via radio-frequency connection means of its own with adequate range (for example from 1 to 10 km).

In addition, said at least one MASTER light-warning device TZ equipped with means for receiving data from the vehicle via radio is also equipped with means for processing the aforesaid received data, which are designed to generate, together with the other units TZ wireless-connected thereto, a light warning that is visible to the pilot of the aircraft for identifying precisely the path to be followed and the speed to be maintained, and for signalling the possible presence of other aircraft in the vicinity.

The other light-warning devices TZ belonging to the network according to the invention, which are without the means for RF communication with the aircraft and the data-processing means, will be referred to hereinafter as SLAVES TZ and communicate in wireless mode with one another and with said at least one MASTER device TZ.

In other words, two types of RF communications are preferably envisaged: wireless communications between the devices TZ, MASTER/SLAVE and SLAVE/SLAVE, and communications between the MASTER device TZ and the vehicle.

From what has been said it is evident that in one and the same network of light-warning devices TZ, at least one MASTER device is provided, which functions as controller in sending warning commands for the SLAVE devices.

A better understanding of the invention will be obtained from the ensuing detailed description with reference to the attached drawings, which illustrate, purely by way of non-limiting example, a preferred embodiment thereof.

In the drawings:
Figure 1 shows a typical arrangement of light-warning devices according to the invention, which in what follows will be also indicated, for reasons of brevity, as "warning lamps" or simply as "devices TZ"; and
Figure 2 shows a block diagram of a preferred embodiment of a light-warning device or warning lamp according to the invention.

In what follows, reference will be made to the case of aircraft and landing strips, but the invention may be applied, without substantial modifications and with the same advantages, also to motor vehicles or watercraft.

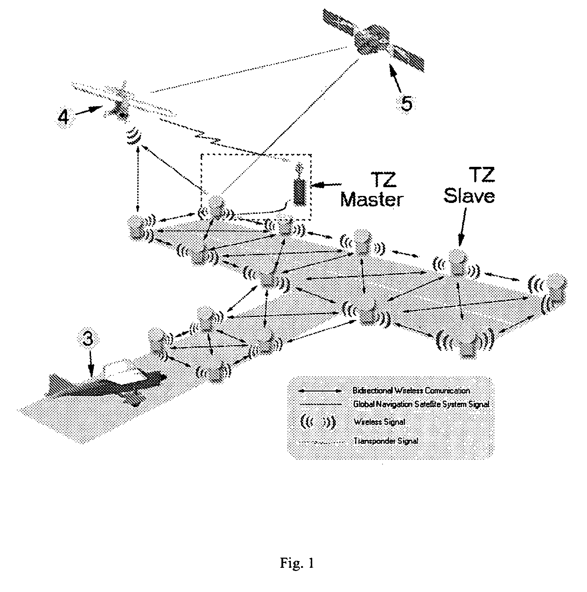

With reference to Figure 1, a typical arrangement of the warning devices described herein, suitable for aeronautic applications, can comprise a warning lamp every 30-60 m along each side of the runway (which for a small airport is 1000-1500 m long) and other warning lamps at the intersections of the runway with or taxi ways.

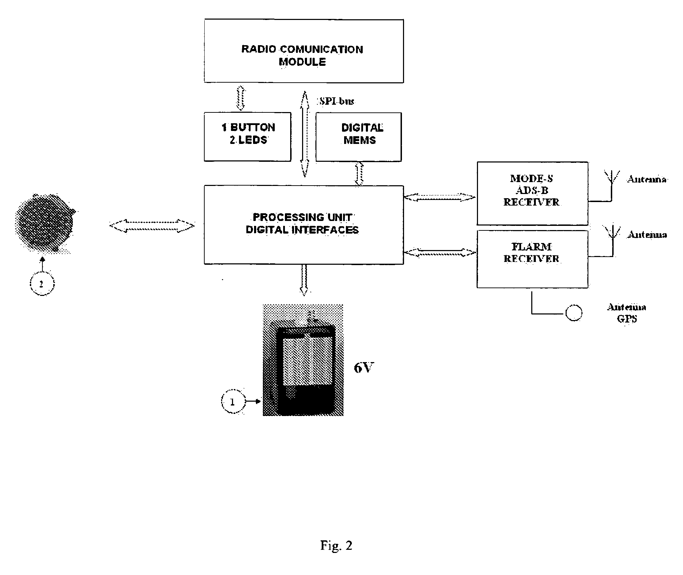

According to the present invention and with reference to Figure 2, each warning lamp TZ is equipped with a wireless data transceiver, which operates in the VHF and/or UHF and/or 2.4-GHz band. Each transceiver is equipped with purposely provided transmission means that use an appropriate protocol for transmitting the data received to the other lamps TZ in a generalized way (broadcasting) or in a selective way.

Each lamp TZ is preferably equipped with an autonomous energy source of its own, which can comprise high-capacity batteries and/or rechargeable batteries combined with photovoltaic solar panels.

According to a peculiar characteristic of the invention, each warning lamp TZ retransmits the data received to the closest lamp, but in the case where the latter is out of order it is envisaged that the power of the wireless signals transmitted is such that the network of lamps or light-warning devices TZ is reconfigured automatically in order to use a different propagation path (Figure 1).

The period of effective operation of the warning lamps is very short as compared to their total time of operativeness. In a small airport, evening or night landings do not exceed ten per night so that the total duration of effective operation, over a 24-hour period, is normally less than 20 minutes.

In the preferred embodiment that is described, the warning lamp comprises an array of LEDs 2, preferably from ten to thirty, of a high-power type (for example 3 W), which are able to supply the same light beam as a 500-W halogen lamp.

Advantageously, the high frequency of pulsation of the LEDs, albeit maintaining unvaried its visibility to the human eye, sensibly reduces the amount of energy used so that a battery 1 of a standard type can supply energy for a period of over six months without requiring any maintenance.

If night traffic were to be considerably more intense than what has now been hypothesized, it would be expedient to use rechargeable batteries connected to a photovoltaic solar panel.

At least the MASTER light-warning device TZ is controlled by a microprocessor of its own, which manages the flashing pattern of the LEDs and receives and retransmits information and commands through the wireless connection from and to:
- the aircraft equipped with transponder;
- the local weather station;
- the other light-warning devices TZ belonging to the warning network; and
- a possible computerized system for traffic monitoring and control.

It should be noted that in aeroplanes different types of RF connections can be used. Those that can be integrated with the present invention are the ones that transmit identifier code and/or geographical co-ordinates and/or ground speed and/or altitude and/or direction, such as for example mode-S/ADS-B transponders and FLARMs.

It should, however, be noted that for the purposes of the invention, in addition to the existing transponders approved for use in aeronautics, it is advantageously possible to use wireless units connected to a GPS for sending/receiving the aforesaid data.

When an aeroplane is detected in the area defined by a series of co-ordinates and its speed and altitude are compatible with the intention of landing, it is envisaged that at least one of the MASTER devices TZ acquires the data regarding the intensity and direction of the wind and will determine the direction of landing, communicating to the other SLAVE devices TZ (or MASTER devices that function in SLAVE mode) the correct activation sequence for the specific case. Aeroplanes land always into the wind.

If the aircraft that is in the proximity of the runway is equipped with a wireless-communication device that is able to communicate with the devices TZ, the light-warning network can directly calculate the position of the aircraft by analysing the power of the signal received by the on-board wireless device.

This analysis can be considered an additional means for precise location of the means of transport that can be used also as dual control of the GPS information or as an alternative thereto, as could be necessary in adverse conditions.

The presence of an aircraft 3 communicating with the devices TZ on a runway or in a taxi way thereof can be signalled to the other aeroplanes 4 via a different pattern of the light warning obtained with the warning lamps present in the vicinity of the aircraft 3 itself in order to obtain an effective means for preventing encroachment on the runway.

Another peculiar characteristic of the invention consists in the fact that the light-warning device TZ described can be used also as mere lamp for lighting: in the first place, to reduce the flashing that could bother the pilot who finds himself very close, and in the second place to stake out the operative area better.

The light-warning device TZ described so far can be used with different modalities according to the specific conditions of use. The minimum configuration envisages that the warning device TZ will be controlled manually. This operating mode is always available when the RF connection with the aircraft is not functioning or cannot be used for some reason. The manual control can be provided by a MASTER TZ or other device that is able to function in a similar way, or else by a remote controller comprising a wireless-communication module, or else by a PC connected to a wireless-communication module, or again via an RF signal sent by a radio of a standard aeronautical type for voice communications, which is detected by a purposely provided RF receiver, which in turn activates a wireless device.

The use of the wireless network, with its routing capacity that ensures a reliable communication, albeit enabling a simplified arrangement of the light-warning devices, is one of the most important features of the invention. Given that, according to an internationally accepted rule, the distance between the warning lamps of a landing strip cannot exceed 200 ft (a little less than 61 m), with a range of communication of 200 m for each wireless module, the failure of two consecutive warning lamps (or nodes of the wireless network) will not jeopardize operation of the remaining light-warning devices.

Each light-warning device is preferably equipped with a microprocessor, which, in addition to the function of wireless-communication node, that of processing data on the position of the moving vehicles, and that of smart control of the LEDs, is able to supply the following information:
- State of the battery, i.e., open-circuit voltage and voltage at a pre-defined load;
- Level of environmental lighting, in order to be able to synchronize activation of all the warning lamps at a given level of twilight;
- Inclination indicator for monitoring the vertical position of the device and signalling any possible non-authorized attempts at removal;
- Signal-power indicator for measuring the intensity of the signal coming from the vehicle that is due to arrive at a given time, to make it possible to determine which is the warning lamp closest to the vehicle that is arriving.

In the case of practical high-integration applications, the network of light-warning devices according to the invention can be connected to an airport control system that sends the commands to the warning lamps, with the capacity of managing each lamp or combination of lamps for signalling a specific path to the vehicle/vehicles that are in movement.

An example of integration could be constituted by the connection with a control tower of a known type, which is able to acquire the data of aircraft identification, position, speed, and direction regarding the aircraft that are moving in the airport area, from the aeronautic transponders and from the FLARM anti-collision systems of rescue helicopters, gliders, and small aircraft.

Advantageously, according to the invention, it is possible to reproduce a 2D or 3D map of the airport, represented in which are the strips with the warning lamps described so far, which can have a shape and/or intensity and/or colours that differ according to their effective distance from the aircraft that are in transit, to provide the control-tower operator with a precise and confirmed location of the aeroplane.

In fact, an intruder could use a transponder when he is at a certain distance from the airport and send simulated data; this would be detected by the control tower as a moving aircraft. According to the invention, however, in this case the wireless signal (which would have to be emitted by the node present on the aircraft and would be received differently by the various warning lamps arranged along the strips) would come to be missing. Said signal not received by the warning lamps, or the presence of signals received by them that are not compatible with the data sent by the transponder of the intruder would highlight the presence of an intruder.

According to a further peculiar characteristic of the invention, it is also possible to envisage that each lamp or light-warning device that constitutes a node of the wireless-communication network will comprise a GPS receiver. In this way, with a PC connected to the Internet and equipped with an appropriate software it would be possible, in cases of civil and/or military emergency, to position simply said warning lamps on an appropriate surface, purposely identified, for aeroplanes or helicopters in any area of the world. In this case, each light-warning device sends to the wireless network the information regarding its own position through a geographical-network connection with a purposely provided control centre.

The control centre updates its own database of the operating vehicles and retransmits to the network of warning devices the identification data of the vehicles authorized to land in that the area, so that, when an aircraft approaches the area equipped with the light-warning devices, these will be activated only if the aircraft is among the ones authorized to land.

If the vehicle is authorized, the warning lamps are activated, providing the pilot with visual indications useful for landing and also signalling possible inadequate speed of the aircraft, the wind direction and speed on the ground, the possible wrong angle of approach, the presence of other aircraft, etc.

## Claims

1. A network of light-warning devices delimiting a geographical area, adapted to guide the pilot of a means of transport, comprising, in combination:
- at least one light-warning device (TZ), or warning lamp, referred to as MASTER, equipped with means for exchanging data with means of air and/or land and/or naval transport by receiving and sending radio-frequency signals; and
- one or more SLAVE light-warning devices (TZ) designed to receive signals from the master and able to configure themselves in conformance with the data contained in said signals;
**characterized in that**
said slave light-warning devices are provided with
- means to retransmit to the other SLAVES/MASTERS (TZ), via wireless connection, the signals received from the MASTER device (TZ) and;
each MASTER device (TZ) is provided with
- means for wireless bidirectional communication with other MASTER or SLAVE light-warning devices (TZ) of the network and;
wherein at least one of the MASTER devices (TZ) is
- connected to a land weather station for detection of the meteorological data useful to the means of transport that is approaching the area equipped with the network of light-warning devices (TZ); and further also
- equipped with means adapted to
• decide whether the light-warning devices should be activated based on the identification, position, height, speed and direction data received from the means of transport and;
• send a signal to the other devices (TZ) of the network the data for providing the pilot of the means of transport with the correct visual information, taking into account the meteorological data and the possible presence of other means in the vicinity.

2. The network according to Claim 1, **characterized in that** each warning device or lamp (TZ) is designed to retransmit the data received to the closest device (TZ); the power of the wireless signals transmitted by each device (TZ) being such that, in the case where the latter is out of order, the network of light-warning devices (TZ) or lamps can reconfigure itself automatically in order to use a different propagation path.

3. The network according to Claim 1, **characterized in that** each light-warning device comprises a plurality of high-power LEDs (2), which are designed to provide also a lighting function and are arranged so as to favour signalling along the axis of the runway for the manoeuvres of approach and/or for irradiating light in all directions for signalling at a distance the position of the runway, the intensity of which is adjusted with high-frequency pulses in order to provide sufficient visibility for each type of manoeuvre and to reduce simultaneously battery consumption.

4. The network according to Claim 1, **characterized in that** each warning device (TZ) or lamp is equipped with a wireless data transceiver which operates in the VHF and/or UHF and/or 2.4-GHz band; said transceiver being equipped with purposely provided transmission means that use an appropriate protocol for transmitting the data received to the devices (TZ) in a generalized way (broadcasting) or in a selective way.

5. The network according to the preceding claim, **characterized in that** each device or lamp (TZ) is equipped with an autonomous energy source of its own, which comprises high-capacity batteries and/or rechargeable batteries combined with photovoltaic solar panels.

6. The network according to Claim 1, **characterized in that** at least the MASTER light-warning device (TZ) is controlled by a microprocessor of its own, which manages the flashing pattern of the LEDs and which receives and retransmits information and commands through the wireless connection from and to:
- the means of transport equipped with wireless transponder or transceiver;
- a local weather station;
- the other light-warning devices (TZ) belonging to the warning network; and
- a possible computerized system for traffic monitoring and control.

7. The network according to Claim 7, **characterized in that** the presence of an aircraft (3) communicating with the devices (TZ) on a runway or in a taxi way thereof is signalled to the other aeroplanes (4) via a different pattern of the light warning obtained with the warning lamps (TZ) present in the vicinity of the aircraft (3) itself in order to prevent any encroaching on the runway.

8. The network according to Claim 1, **characterized in that** each light-warning device (TZ) is equipped with a microprocessor, which, in addition to the functions of wireless-communication node, of processing of the data of position of the vehicles in motion, and of smart control of the LEDs, is able to supply the following information:
- battery state: open-circuit voltage and voltage with a pre-defined load;
- level of environmental lighting, in order to be able to synchronize activation of all the warning lamps at a given level of evening light;
- inclination indicator, in order to monitor the vertical position of the device and signal any possible non-authorized attempts at removal; and
- signal-power indicator, i.e., measurement of the intensity of the signal received by the vehicle that is due to arrive at a given time in order to make it possible to determine which warning lamp is closest to the vehicle that is arriving.

9. The network according to Claim 1, **characterized in that**, in the case of high-integration practical applications, it can be connected to an airport control system, which sends the commands to the warning devices (TZ), with the capacity of managing each device (TZ) or combination of devices (TZ) for signalling a specific path to the moving vehicle/vehicles.

10. The network according to Claim 1, **characterized in that** each light-warning device (TZ) that constitutes a node of the wireless-communication network comprises a GPS receiver for enabling wireless transmission also of the data regarding its own position.

11. The network according to Claim 1, **characterized in that** the MASTER device (TZ) is designed to receive also the identifying data of a list of means of transport authorized to access the area delimited by the warning network itself in such a way that the warning devices (TZ) can be activated only when the authorized means of transport are approaching, and not when just any means of transport is approaching.

## Patentansprüche

1. Netz von ein geografisches Gebiet begrenzenden Lichtwarnvorrichtungen, die den Piloten eines Transportmittels leiten sollen, in Kombination umfassend:
- mindestens ein als MASTER bezeichnetes Lichtwarngerät (TZ) oder Warnlampe, ausgerüstet mit einer Einrichtung zum Austauschen von Daten eines Luft- und/oder Land- und/oder Seetransportmittels durch Empfangen und Senden von Funksignalen; und
- ein oder mehrere SLAVE Lichtwarngeräte (TZ), die zum Empfangen von Signalen aus dem Hauptgerät ausgelegt sind und sich in Übereinstimmung mit den in den Signalen enthaltenen Daten konfigurieren können;
**dadurch gekennzeichnet, dass**
die Lichtwarnnebengeräte versehen sind mit
- Einrichtungen zum Weitergeben der von dem Hauptgerät (TZ) empfangenen Signale über eine drahtlose Verbindung an die anderen Neben-/Hauptgeräte (TZ); und jedes MASTER Gerät (TZ) versehen ist mit
- Einrichtungen zur drahtlosen, zweiseitig gerichteten Kommunikation mit anderen MASTER oder SLAVE Lichtwarngeräten (TZ) des Netzes; und
bei dem zumindest eines der MASTER Geräte (TZ)
- verbunden ist mit einer Wetterstation an Land zur Erfassung der meteorologischen Daten, die für das Transportmittel nützlich sind, das sich dem mit dem Netz von Lichtwarngeräten (TZ) ausgerüsteten Gebiet annähert; und des Weiteren auch
- mit Mitteln ausgerüstet ist, die angepasst sind, um
• zu entscheiden, ob die Lichtwarngeräte basierend auf den Erkennungs-, Positions-, Höhen-, Geschwindigkeits- und Richtungsdaten, die von dem Transportmittel empfangen werden, aktiviert werden sollten; und
• an die anderen Geräte (TZ) des Netzes ein Signal der Daten zu senden, um dem Piloten des Transportmittels die genauen Sichtinformationen unter Berücksichtigung der meteorologischen Daten und dem möglichen Vorhandensein anderer Mittel in der Nähe zur Verfügung zu stellen.

2. Netz nach Anspruch 1,
**dadurch gekennzeichnet, dass**
jedes Warngerät oder Lampe (TZ) zum Weitergeben der empfangenen Daten an das nächstgelegene Gerät (TZ) ausgelegt ist; die Leistung der durch jedes Gerät (TZ) übertragenen Funksignale so ist, dass in dem Fall, dass letzteres defekt ist, das Netz von Lichtwarngeräten (TZ) oder Lampen sich automatisch rekonfigurieren kann, um einen anderen Ausbreitungsweg zu nutzen.

3. Netz nach Anspruch 1,
**dadurch gekennzeichnet, dass**
jedes Lichtwarngerät eine Vielzahl hochleistungsfähiger LEDs (2) aufweist, die ausgelegt sind, um außerdem eine Beleuchtungsfunktion zu bewirken, und angeordnet sind, um eine Signalabgabe längs der Achse der Start- und Landebahn für die Anflugmanöver zu begünstigen und/oder Licht zum Signalisieren in einem Abstand der Position der Start- und Landebahn in alle Richtungen zu werfen, dessen Intensität mit Hochfrequenzimpulsen eingestellt wird, um eine genügende Sicht für jede Manövrierart zu schaffen und gleichzeitig Batterieverbrauch zu reduzieren.

4. Netz nach Anspruch 1,
**dadurch gekennzeichnet, dass**
jedes Warngerät (TZ) oder Lampe mit einem Daten-Funksender-Empfänger ausgerüstet ist, der im VHF- und/oder UHF- und/oder 2,4 GHz- Band arbeitet;
der Sender-Empfänger mit absichtlich vorgesehenen Übertragungsmitteln versehen ist, die ein entsprechendes Protokoll zum Übertragen der empfangenen Daten an die Geräte (TZ) in einer generalisierten Art und Weise (Senden) oder in einer selektiven Art und Weise verwenden.

5. Netz nach dem vorhergehenden Anspruch,
**dadurch gekennzeichnet, dass**
jedes Gerät oder Lampe (TZ) mit einer eigenen unabhängigen Energiequelle
ausgerüstet ist, die hochleistungsfähige Batterien und/oder wieder aufladbare Batterien kombiniert mit photovoltaischen Solarpanels aufweist.

6. Netz nach Anspruch 1,
**dadurch gekennzeichnet, dass**
zumindest das MASTER Lichtwarngerät (TZ) durch einen eigenen Mikroprozessor gesteuert wird, der das Blinkmuster der LEDs bewerkstelligt und der Informationen und Befehle durch die drahtlose Verbindung empfängt und weitermeldet von und zu:
- dem Transportmittel, das mit einem drahtlosen Transponder oder Sender-Empfänger ausgerüstet ist;
- einer lokalen Wetterstation;
- den anderen Lichtwarngeräten (TZ), die zu dem Warnnetz gehören; und
- einem möglichen computerisierten System zur Verkehrsüberwachung und Aufsicht.

7. Netz nach Anspruch 1,
**dadurch gekennzeichnet, dass**
die Präsenz eines mit den Geräten (TZ) kommunizierenden Luftfahrzeugs (3) auf einer Start- und Landebahn oder in deren Rollbahn den anderen Flugzeugen (4) über ein unterschiedliches Muster der Lichtwarnung signalisiert wird, das mit den in der Nähe des Luftfahrzeugs (3) selbst vorhandenen Warnlampen (TZ) erreicht wird, um etwaiges unbefugtes Eindringen auf der Start- und Landebahn zu verhindern.

8. Netz nach Anspruch 1,
**dadurch gekennzeichnet, dass**
jedes Lichtwarngerät (TZ) mit einem Mikroprozessor ausgerüstet ist, der in Ergänzung zu den Funktionen eines drahtlosen Kommunikationsknotens einer Verarbeitung der Positionsdaten der in Bewegung befindlichen Fahrzeuge und einer intelligenten Steuerung der LEDs imstande ist, die folgenden Informationen zu liefern:
- Batteriezustand: Leerlaufspannung und Spannung mit einer vorbestimmten Belastung;
- Grad der Umweltbeleuchtung, um eine Aktivierung aller Warnlampen bei einem gegebenen Grad von Abendlicht synchronisieren zu können;
- Schräglageanzeiger, um die vertikale Position des Gerätes zu überwachen und etwaige mögliche unerlaubte Versuche bei Entfernung zu signalisieren; und
- Signalleistungsanzeiger, d.h. Messung der Intensität des durch das Fahrzeug empfangenen Signals, das zu einem gegebenen Zeitpunkt ankommen soll, um eine Bestimmung zu ermöglichen, welche Warnlampe dem Fahrzeug, das erscheint, am nächsten ist.

9. Netz nach Anspruch 1,
**dadurch gekennzeichnet, dass**
es in dem Fall von praktischen Hochintegrationsanwendungen angeschlossen werden kann an ein Flughafenkontrollsystem, das die Befehle an die Warngeräte (TZ) sendet, mit der Kapazität, jedes Gerät (TZ) oder Kombination von Geräten (TZ) zu bedienen, um einen spezifischen Weg an das (die) sich bewegende(n) Fahrzeug/Fahrzeuge zu signalisieren.

10. Netz nach Anspruch 1,
**dadurch gekennzeichnet, dass**
jedes Lichtwarngerät (TZ), das einen Knoten des drahtlosen Kommunikationsnetzes bildet, einen GPS Empfänger aufweist, um Funkübertragung auch der Daten zu ermöglichen, die seine eigene Position betreffen.

11. Netz nach Anspruch 1,
**dadurch gekennzeichnet, dass**
das MASTER Gerät (TZ) so ausgelegt ist, um auch die Erkennungsdaten einer Liste von Transportmitteln zu empfangen, die für einen Zugang zu dem durch das Warnnetz selbst begrenzte Gebiet in der Weise befugt sind, dass die Warngeräte (TZ) nur aktiviert werden können, wenn sich die befugten Transportmittel annähern, und nicht, wenn sich nur irgendein Transportmittel annähert.

## Revendications

1. Réseau de dispositifs de signalisation lumineuse délimitant une zone géographique, adapté pour guider le pilote d'un moyen de transport, comprenant, en combinaison .
- au moins un dispositif de signalisation lumineuse (TZ), ou lampe de signalisation, indiqué comme MAITRE, équipé de moyen pour échanger des données avec des moyens de transport aérien et/ou terrestre et/ou maritime en recevant et en transmettant des signaux de radiofréquence ; et
- un ou plusieurs dispositifs de signalisation lumineuse ESCLAVES (TZ) conçus pour recevoir des signaux provenant du maître et capables de se configurer eux-mêmes conformément aux données contenues dans lesdits signaux ;
**caractérisé en ce que**
lesdits dispositifs de signalisation lumineuse esclaves sont pourvus de :
- moyens pour retransmettre aux autres ESCLAVES/MAITRES (TZ), via une connexion sans fil, les signaux reçus en provenance du dispositif MAITRE (TZ) ; et
Chaque dispositif MAITRE (TZ) est pourvu de :
- moyens pour une communication bidirectionnelle sans fil avec d'autres dispositifs de signalisation lumineuse MAITRES ou ESCLAVES (TZ) du réseau ; et
dans lequel au moins un des dispositifs MAITRES (TZ) est
- connecté à une station météo terrestre pour la détection des données météorologiques utiles pour les moyens de transport qui sont en approche de la zone équipée du réseau de dispositifs de signalisation lumineuse (TZ) ; et en outre aussi
- équipé de moyens adaptés pour
• décider si les dispositifs de signalisation lumineuse devraient être activés sur la base des données d'identification, position, altitude, vitesse et direction reçus en provenance des moyens de transport ; et
• transmettre un signal aux autres dispositifs (TZ) du réseau, les données pour fournir au pilote des moyens de transport les informations visuelles correctes, tenant compte des données météorologiques et de la présence possible d'autres moyens dans le voisinage.

2. Réseau selon la revendication 1, **caractérisé en ce que** chaque dispositif ou lampe de signalisation (TZ) est conçue pour retransmettre les données reçues au dispositif le plus proche (TZ) ; la puissance des signaux sans fil transmis par chaque dispositif (TZ) étant telle que, dans le cas à ce dernier serait hors service, le réseau de dispositifs de signalisation lumineuse (TZ) ou lampes puisse se reconfigurer automatiquement afin d'utiliser un trajet de propagation différent.

3. Réseau selon la revendication 1, **caractérisé en ce que** chaque dispositif de signalisation lumineuse comprend une pluralité de LED à haute puissance (2), qui sont conçues pour fournir également une fonction d'éclairage et sont agencées de manière à favoriser une signalisation le long de l'axe de la piste pour les manoeuvres d'approche et/ou pour rayonner de la lumière dans toutes les directions pour signaler à distance la position de la piste, dont l'intensité est réglée avec des impulsions à haute fréquence de manière à fournir une visibilité suffisante pour chaque type de manoeuvre et pour réduire simultanément la consommation de batterie.

4. Réseau selon la revendication 1, **caractérisé en ce que** chaque dispositif de signalisation (TZ) ou lampe est équipé d'un émetteur-récepteur de données sans fil qui fonctionne dans une bande VHF et/ou UHF et/ou de 2,4 GHz ; ledit émetteur-récepteur étant équipé de moyens de transmission spécifiques qui utilisent un protocole approprié pour transmettre les données reçues aux dispositifs (TZ) d'une manière généralisée (multidiffusion) ou d'une manière sélective.

5. Réseau selon la revendication précédente, **caractérisé en ce que** chaque dispositif ou lampe (TZ) est équipé indépendamment d'une source d'énergie autonome, qui comprend des batteries à haute capacité et/ou des batteries rechargeables combinées avec des panneaux solaires photovoltaïques.

6. Réseau selon la revendication 1, **caractérisé en ce qu'**au moins le dispositif de signalisation lumineuse MAITRE (TZ) est commandé indépendamment par un microprocesseur, qui gère le schéma de clignotement des LED et qui reçoit et retransmet des informations et commandes à travers la connexion sans fil de et vers :
- les moyens de transport équipés de transpondeur ou d'émetteur-récepteur sans fil ;
- une station météo locale ;
- l'autre dispositif de signalisation lumineuse (TZ) appartenant au réseau de signalisation ; et
- un éventuel système informatisé pour la surveillance et le contrôle de trafic.

7. Réseau selon la revendication 7, **caractérisé en ce que** la présence d'un avion (3) communiquant avec les dispositifs (TZ) sur une piste ou dans un chemin de roulement de ceux-ci est signalé aux autres aéroplanes (4) via un schéma différent de la signalisation lumineuse obtenue avec les lampes de signalisation (TZ) présentes dans le voisinage de l'avion (3) lui-même de manière à éviter tout empiètement sur la piste.

8. Réseau selon la revendication 1, **caractérisé en ce que** chaque dispositif de signalisation lumineuse (TZ) est équipé d'un microprocesseur, lequel, en plus des fonctions de noeud de communication sans fil, de traitement des données de position des véhicules en mouvement et de commande intelligente des LED, est en mesure de fournir les informations suivantes :
- état des batteries : tension en circuit ouvert et tension avec une charge prédéfinie ;
- niveau de luminosité ambiante, de manière à être en mesure de synchroniser l'activation de toutes les lampes de signalisation à un niveau donné de lumière du soir;
- indicateur d'inclinaison, de manière à surveiller la position verticale du dispositif et signaler toutes éventuelles tentatives non autorisées d'enlèvement ; et
- indicateur de puissance de signal, c'est-à-dire de mesure de l'intensité du signal reçu par le véhicule qui est sensé arriver à un instant donné de manière à permettre de déterminer quelle lampe de signalisation est la plus proche du véhicule qui arrive.

9. Réseau selon la revendication 1, **caractérisé en ce que**, dans le cas d'applications pratiques à haute intégration, il peut être connecté à un système de contrôle d'aéroport, qui transmet les instructions aux dispositifs de signalisation (TZ), avec la capacité de gérer chaque dispositif (TZ) ou combinaison de dispositifs (TZ) pout signaler un parcours spécifique au véhicule/aux véhicules en mouvement.

10. Réseau selon la revendication 1, **caractérisé en ce que** chaque dispositif de signalisation lumineuse (TZ) qui constitue un noeud du réseau de communication sans fil comprend un récepteur GPS pour permettre une transmission sans fil également des données relatives à sa propre position.

11. Réseau selon la revendication 1, **caractérisé en ce que** le dispositif MAITRE (TZ) est conçu pour recevoir également les données d'identification d'une liste de moyens de transport autorisés à accéder à la zone délimitée par le réseau de signalement lui-même de manière que les dispositifs de signalement (TZ) puissent être activés seulement quand les moyens de transport autorisés sont en approche, et pas seulement quand n'importe quel moyen de transport est en approche.
